(19) Europäisches Patentamt
European Patent Office
Office européen des brevets

(11) **EP 3 415 224 B1**

(12) **EUROPEAN PATENT SPECIFICATION**

(45) Date of publication and mention
of the grant of the patent:
**14.07.2021 Bulletin 2021/28**

(51) Int Cl.:
**B01D 61/02** *(2006.01)* **B01D 63/10** *(2006.01)*
**B01D 65/08** *(2006.01)* **C02F 1/44** *(2006.01)*
**C02F 103/08** *(2006.01)*

(21) Application number: **17856598.2**

(22) Date of filing: **06.09.2017**

(86) International application number:
**PCT/KR2017/009754**

(87) International publication number:
**WO 2018/062712 (05.04.2018 Gazette 2018/14)**

(54) **REVERSE OSMOSIS FILTER MODULE**

UMKEHROSMOSE-FILTERMODUL

MODULE DE FILTRE À OSMOSE INVERSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.09.2016 KR 20160124788**

(43) Date of publication of application:
**19.12.2018 Bulletin 2018/51**

(73) Proprietor: **LG Chem, Ltd.
Seoul 07336 (KR)**

(72) Inventors:
• **CHOI, Junwon
Daejeon 34122 (KR)**
• **IM, Ye Hoon
Daejeon 34122 (KR)**

(74) Representative: **Goddar, Heinz J.
Boehmert & Boehmert
Anwaltspartnerschaft mbB
Pettenkoferstrasse 22
80336 München (DE)**

(56) References cited:
KR-A- 20040 086 835     KR-A- 20100 109 156
KR-B1- 100 842 074       US-A1- 2003 205 520
US-A1- 2012 298 578

• **ABHISHEK SHRIVASTAVA ET AL: "Predicting the effect of membrane spacers on mass transfer", JOURNAL OF MEMBRANE SCIENCE, vol. 323, no. 2, 5 June 2008 (2008-06-05), pages 247-256, XP055559938, NL ISSN: 0376-7388, DOI: 10.1016/j.memsci.2008.05.060**
• **CLEMENS FRITZMANN ET AL: "Helically microstructured spacers improve mass transfer and fractionation selectivity in ultrafiltration", JOURNAL OF MEMBRANE SCIENCE, vol. 463, 28 March 2014 (2014-03-28), pages 41-48, XP055560298, NL ISSN: 0376-7388, DOI: 10.1016/j.memsci.2014.03.059**
• **Alyson Sagle ET AL: "Fundamentals of Membranes for Water Treatment", , 30 December 2004 (2004-12-30), XP055560307, Retrieved from the Internet: URL:http://texaswater.tamu.edu/readings/desal/membranetechnology.pdf [retrieved on 2019-02-21]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

[Technical Field]

This application claims priority to and the benefit of Korean Patent Application No. 10-2016-0124788 filed in the Korean Intellectual Property Office on September 28, 2016.

The present invention relates to a reverse osmosis filter module including an improved feed spacer, and more particularly, to a reverse osmosis filter module including an improved feed spacer, in which spiral filaments are repeatedly positioned to form the feed spacer, such that a flow of a liquid to be supplied to the feed spacer is concentrated on a surface of a reverse osmosis membrane to effectively mitigate concentration polarization.

[Background Art]

The lack of water caused by global warming is getting worse globally, and thus water purification technologies for ensuring alternative water resources have attracted attention.

Therefore, a water treatment process, which uses a reverse osmosis membrane which is a key technology for next-generation water treatment processes that utilize alternative water resources such as seawater desalination, water recycling, and the like, is expected to dominate industrial water markets.

Reverse osmosis membrane permeable water made by the reverse osmosis membrane becomes pure water or water very close to pure water, and used in various fields such as fields related to medical sterile water, purified water for artificial dialysis, or water for manufacturing semiconductors in an electronic field.

Here, the reverse osmosis refers to a phenomenon in which a predetermined difference in water level occurs while a solution with low concentration is moved to a solution with high concentration when a predetermined period of time has passed after the two solutions having a difference in concentration are separated by a semipermeable membrane. In addition, a difference in water level occurring during this process refers to reverse osmotic pressure. An apparatus, which purifies water by allowing only water molecules to pass through the semipermeable membrane by using this principle, is referred to as a reverse osmosis facility, and the semipermeable membrane used for the reverse osmosis facility is a reverse osmosis filter module.

The reverse osmosis filter module includes a central tube, a feed spacer, a reverse osmosis (RO) membrane, and a tricot filtration channel.

Among the components, the feed spacer serves as a passageway through which raw water is introduced. Differential pressure occurs as a flow of raw water is hindered by the feed spacer when the raw water is introduced through the feed spacer, which results in an increase in energy costs, and as a result, the lower the differential pressure, the greater the efficiency of the reverse osmosis filter module.

Meanwhile, concentration polarization inevitably occurs in the vicinity of the reverse osmosis membrane due to a water permeation flux, and as the concentration polarization becomes worse, the osmotic pressure is increased in the vicinity of the reverse osmosis membrane, such that water permeability deteriorates.

In this regard, there is a need for a feed spacer capable of improving efficiency of a reverse osmosis filter module by reducing the occurrence of differential pressure and mitigating concentration polarization.

US 2012/298578 A1 describes a filtration system comprising a spiral wound filtration membrane including an open feed spacer, which is for example provided as an embossed or printed pattern on the filtration membrane, thereby creating a thin feed spacer channel. The system further employs a treatment device to enable a variable fluid treatment scheme to condition particles in a fluid stream.

Shrivastava et al.: "Predicting the effect of membrane spacers on mass transfer" in Journal of Membrane Science, vol. 323, No. 2, 5 June 2008, pages 247-256 examines diverse arrangements for ultrafiltration and reverse osmosis in terms of the concentration polarization problem. Static mixers and other flow barriers are placed as spacers next to the membrane surface. The spacers may be shaped like ladders, herringbones, and helices. The effect of these spacers are predicted from extensions of the Leveque equation.

Fritzmann et al.: "Helically microstructured spacers improve mass transfer and fractionation selectivity in ultrafiltration", Journal of Membrane Science, vol. 463, 28 March 2014, pages 41-48 investigates 3D-printed helically micro-structured spacers in comparison to net spacers. The influence of fluid hydrodynamics on mass transport enhancement and process selectivity is examined. Ultrafiltration experiments with defined Dextran Solutions focus on the molecular weight cut-off and the separation quality at various operating conditions. It was found that the micro-structured spacers perform better regarding the overall mass transfer coefficient, process selectivity and overall performance at equal cross flow power consumption, when compared to net-spacers.

[Detailed Description of the Invention]

[Technical Problem]

The present invention has been contrived to solve the aforementioned problems, and an object of the present invention is to provide a reverse osmosis filter module in which spiral filaments are repeatedly positioned to form a feed spacer in order to reduce differential pressure by increasing a cross-sectional area of a flow path, and concentrate a flow of a vortex of raw water on a surface of a reverse osmosis membrane.

[Technical Solution]

According to the invention, a reverse osmosis filter as defined in claim 1 is provided. Other embodiments and aspects not falling within the scope of claim 1 are not part of the invention and are to be considered as illustrative examples only.

A reverse osmosis filter module includes: a tube which includes an opening that accommodates a permeable liquid in a longitudinal direction; one or more reverse osmosis membranes which extends outward from the tube and are wound around the tube; and a feed spacer which is in contact with the one or more reverse osmosis membranes and wound around the tube, in which the feed spacer is formed by repeatedly positioning spiral filaments.

The feed spacer may be formed as a single filament which is provided to reciprocate between one side and the other side on a plane.

The filament has a diameter of 0.2 to 0.5 mm.

The filament has a pitch of 780 to 3,120 $\mu$m.

The filament is formed by extrusion molding.

In the reverse osmosis filter module, a vortex of a liquid being supplied to the feed spacer is formed at upper and lower sides of the filament.

[Advantageous Effects]

According to the present invention, the spiral filaments are repeatedly positioned to form the feed spacer, and as a result, it is possible to reduce differential pressure by increasing a cross-sectional area of a flow path, and mitigate concentration polarization by concentrating a vortex of raw water on a surface of a reverse osmosis membrane.

In addition, with the aforementioned effect, it is possible to further improve efficiency of the reverse osmosis filter module.

[Brief Description of Drawings]

FIG. 1 is a perspective view of a reverse osmosis filter module for a water treatment according to an exemplary embodiment of the present invention.

FIG. 2 is a perspective view of a feed spacer used for the reverse osmosis filter module for a water treatment according to the exemplary embodiment of the present invention.

FIG. 3 is a perspective view of a filament used for the reverse osmosis filter module for a water treatment according to the exemplary embodiment of the present invention.

[Best Mode]

Hereinafter, the present invention will be described in detail with reference to the accompanying drawings. Here, repeated descriptions, and detailed descriptions of publicly known functions and configurations will be omitted so as to avoid unnecessarily obscuring the subject matter of the present invention. The exemplary embodiments of the present invention are provided to completely explain the present invention to a person with ordinary skill in the art. Therefore, shapes and sizes of elements illustrated in the drawings may be exaggerated for a more apparent description.

Unless explicitly described to the contrary, the word "comprise" or "include" and variations, such as "comprises", "comprising", "includes" or "including", will be understood to imply the inclusion of stated constituent elements but not the exclusion of any other constituent elements.

Hereinafter, preferred Examples for helping the understanding of the present invention will be suggested.

However, the following Examples are provided just for more easily understanding the present invention, and the scope of the present invention is not limited by the Examples.

<Reverse Osmosis Filter Module>

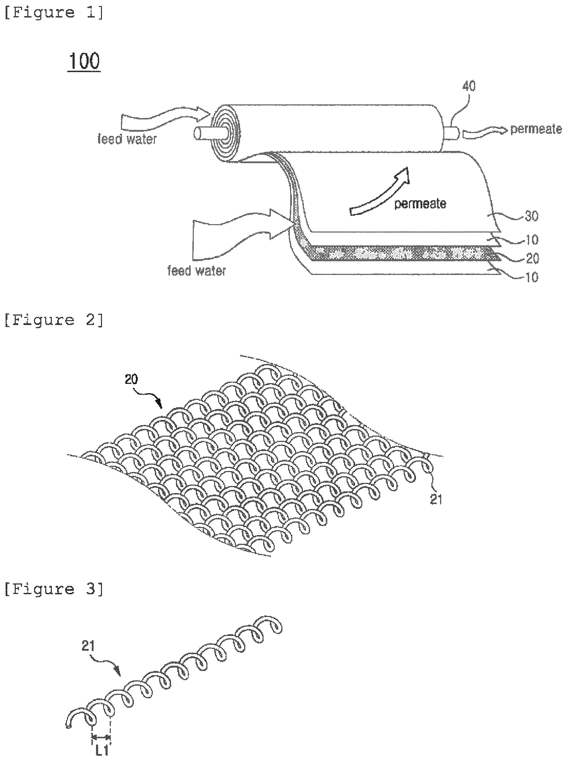

FIG. 1 is a perspective view of a reverse osmosis filter module 100 for a water treatment according to an exemplary embodiment of the present invention, FIG. 2 is a perspective view of a feed spacer 20 used for the reverse osmosis filter module 100 for a water treatment according to the exemplary embodiment of the present invention, and FIG. 3 is a perspective view of a filament 21 used for the reverse osmosis filter module 100 for a water treatment according to the exemplary embodiment of the present invention.

Hereinafter, the reverse osmosis filter module 100 for a water treatment according to the exemplary embodiment of the present invention will be specifically described with reference to FIGS. 1 to 3.

The reverse osmosis filter module 100 is a constituent element of a membrane separation device that serves to purify actually supplied water by using the reverse osmosis principle.

Referring to FIG. 1, the reverse osmosis filter module 100 may include reverse osmosis membranes 10, the feed spacer 20, a tricot filtration channel 30, and a tube 40 having an opening (not illustrated) for accommodating a permeable liquid in a longitudinal direction. Although not illustrated in the drawings, the reverse osmosis filter module 100 may further include a pair of anti-telescoping devices, but a specific description thereof will be omitted.

The one or more reverse osmosis membranes 10 serve to filter the water to remove foreign substances contained in the water by using the osmosis, and also serve as flow paths through which purified water effectively flows.

The one or more reverse osmosis membranes 10 extend outward from the tube 40 and are wound around the tube 40.

The feed spacer 20 forms a passageway through which raw water is introduced from the outside, and serves to maintain an interval between one reverse osmosis membrane 10 and the other reverse osmosis membrane 10. To this end, upper and lower sides of the feed spacer 20 are in contact with the one or more reverse osmosis membranes 10, and the feed spacer 20 is configured to be wound around the tube 40, similar to the one or more reverse osmosis membranes 10.

Here, a material of the feed spacer 20 is not particularly limited, but the feed spacer 20 may be made of any one of polyethylene, polyvinyl chloride, polyester, and polypropylene.

Meanwhile, a specific configuration of the feed spacer 20 will be described below.

The tricot filtration channel 30 generally has a fabric structure, and serves as a flow path for forming a space through which the water purified by the reverse osmosis membrane 10 may flow to the outside.

In this case, the tricot filtration channel 30 generally has a fabric structure, and serves as a flow path for forming a space through which the water purified by the reverse osmosis membrane 10 may flow to the outside.

The tube 40 is positioned at a center of the reverse osmosis filter module 100 for a water treatment, and serves as a passageway through which the filtered water is introduced and discharged.

To this end, a pore (or opening) having a predetermined size may be formed outside the tube 40 so that the filtered water may be introduced. In this case, one or more pores may be formed so that the filtered water may be more efficiently introduced.

Meanwhile, the feed spacer 20 according to the exemplary embodiment of the present invention may be formed as the spiral filaments 21 are repeatedly positioned. Further, the feed spacer 20 may be formed as the single filament 21 is provided to reciprocate between one side and the other side on a plane. For example, the spiral filament 21 is extruded by extrusion molding, and the extruded filament 21 is repeatedly folded in a 'Z' or '⇒' shape, and as a result, the feed spacer 20 may be formed on a two-dimensional plane. In addition, the feed spacer 20 may be formed by manufacturing the multiple spiral filaments 21 by extrusion molding, arranging the multiple filaments 21 in parallel, and bonding connecting portions (not illustrated) to one side and the other side of each of the arranged filaments 21 to fix the filaments 21. Here, the connecting portions and the filaments 21 maybe bonded together in a zigzag manner by positioning the connecting portions at one side of a first filament and one side of a second filament and positioning the connecting portions at the other side of the second filament and the other side of a third filament. In addition, the connecting portion may be formed by extrusion molding.

Multiple circular flow paths are formed by the spiral shape of the filament 21, a diameter of the circular flow path is 0.2 to 0.5 mm, and particularly, a diameter of the flow path may be 0.47 mm. If the diameter of the flow path is equal to or smaller than 0.2 mm, a flow of raw water is hindered when the raw water is introduced, such that differential pressure may be increased, and if the diameter of the flow path is equal to or greater than 0.5 mm, no vortex is formed in the feed spacer 20, such that concentration polarization occurs, and as a result, there may be a problem in that osmotic pressure is increased on a surface of the reverse osmosis membrane 10 and water permeability of the reverse osmosis filter module 100 deteriorates.

In addition, the filament 21 has a pitch of 780 to 3,120 $\mu$m, and the pitch is a distance between the multiple circular flow paths formed by the spiral shape, and if the pitch is smaller than 780 $\mu$m, the filament 21 hinders a flow of the raw water, such that the differential pressure is increased, and as a result, there may be a problem in that energy costs may be increased, and if the pitch is greater than 3,120 $\mu$m, there may be a problem in that a sufficient flow of a vortex cannot be formed.

With this configuration, in the case of the feed spacer 20 according to the present invention, the filaments 21 are extruded in a spiral shape and repeatedly positioned on the two-dimensional plane, such that a vortex of the raw water being supplied to the feed spacer 20 is concentrated on upper and lower portions of the filaments 21, and as a result, it is possible to reduce differential pressure and efficiently mitigate concentration polarization by concentrating the vortex on the surface of the reverse osmosis membrane 10.

<Experimental Example>

Feed spacers in the related art and the feed spacer 20 according to the exemplary embodiment of the present invention, which are used for a reverse osmosis filter module, were compared in terms of differential pressure $\Delta$P[Pa] and a performance of an average mass fraction of salt on the surface of the membrane.

To this end, three feed spacers in the related art and four feed spacers according to the exemplary embodiment of the present invention were compared in terms of the differential pressure and the performance of the average mass fraction of salt on the surface of the membrane in a state in which values of pitches L1 of the feed spacers vary while the other conditions are equally maintained, and the results are shown in Table 1. The experiment region is as follows.

$$* \text{ Width} \times \text{Length} \times \text{Height (Thickness): } 7.75 \text{ mm} \times 15.55 \text{ mm} \times 0.47 \text{ mm}$$

$$* \text{ Inlet Velocity: } 0.3 \text{ m/s}$$

[Table 1]

|  | Pitch | $\Delta$P[Pa] | Average Mass Fraction of Salt on Surface of Membrane |
|---|---|---|---|
| Comparative Example 1 | 2,750 $\mu$m | 1032 | 0.0332 |
| Comparative Example 2 | 5,000 $\mu$m | 730 | 0.0335 |
| Comparative Example 3 | 1,500 $\mu$m | 1705 | 0.0332 |
| Example 1 | 1,560 $\mu$m | 682 | 0.0329 |
| Example 2 | 780 $\mu$m | 1131 | 0.0329 |
| Example 3 | 1,984 $\mu$m | 538 | 0.0331 |
| Example 4 | 3,120 $\mu$m | 379 | 0.0333 |

As described above, Comparative Examples 1 to 3 use a feed spacer in which two filaments intersect each other to form a flow path, Comparative Example 1 uses a feed spacer having a lattice length of 2,750 $\mu$m, Comparative Example 2 uses a feed spacer having a lattice length of 5,000 $\mu$m, and Comparative Example 3 uses a feed spacer having a lattice length of 1,500 $\mu$m. Examples 1 to 4 use the feed spacer 20 according to the present invention, Example 1 uses a feed spacer having a spiral filament in which an interval between flow paths, that is, a pitch is 1,560 $\mu$m, Example 2 uses a feed spacer having a spiral filament with a pitch of 780 $\mu$m, Example 3 uses a feed spacer having a spiral filament with a pitch of 1,984 $\mu$m, and Example 4 uses a feed spacer having a spiral filament with a pitch of 3,120 $\mu$m.

Referring to Table 1, Comparative Example 1 shows that differential pressure is 1,032 Pa and an average mass fraction of salt on a surface of a membrane is 0.0332, Comparative Example 2 shows that differential pressure is 730 Pa and an average mass fraction of salt on a surface of a membrane is 0.0335, and Comparative Example 3 shows that differential pressure is 1,705 Pa and an average mass fraction of salt on a surface of a membrane is 0.0332. Further, it can be seen that Example 1 shows that differential pressure is 682 Pa and an average mass fraction of salt on a surface of a membrane is 0.0329, Example 2 shows that differential pressure is 1,131 Pa and an average mass fraction of salt on a surface of a membrane is 0.0329, Example 3 shows that differential pressure is 538 Pa and an average mass fraction of salt on a surface of a membrane is 0.0331, and Example 4 shows that differential pressure is 379 Pa and an average mass fraction of salt on a surface of a membrane is 0.0333.

In this case, considering that the structure becomes more advantageous in terms of a flow as the differential pressure becomes lower, it has been confirmed that Examples 1 to 4 using the feed spacer according to the present invention have lower differential pressure than Comparative Examples 1 to 3, such that the flow is smooth, and Examples 1 to 4 are advantageous in ensuring the flow path. In more detail, when comparing Comparative Example 1 and Example 4, Comparative Example 1 shows that the average mass fraction of salt on the surface of the membrane is 0.0332, and Example 4 shows that the average mass fraction of salt on the surface of the membrane is 0.0333, and as a result, Comparative Example 1 and Example 4 have similar numerical values, however, it has been confirmed that Comparative Example 1 shows that the differential pressure is 1,032, and Example 4 shows that the differential pressure is 379, and as a result, Example 4 has significantly lower differential pressure than Comparative Example 1. Therefore, it can be determined that a flow is smoother in a feed spacer having a spiral filament than in a feed spacer having a lattice pattern in a case in which the feed spacers have the same average mass fraction of salt on the surface of the membrane.

In addition, considering that the concentration polarization is mitigated well as the vortex is concentrated on the surface of the membrane, it has been confirmed that Examples 1 to 4 using the feed spacer according to the present invention concentrate the vortex on the surface of the membrane, and a flow of salt becomes smooth in the vicinity of the reverse osmosis membrane. That is, when comparing Comparative Example 3 and Example 1, the feed spacer, in which the filament has a spiral shape and thus the spiral flow path is formed, has lower differential pressure and a lower average mass fraction of salt on the surface of the membrane in a case in which Comparative Example 3 and Example 1 have similar intervals between the flow paths, and therefore, the feed spacer having the spiral filament may allow the raw water to smoothly flow in the flow path and may allow the vortex, which is formed in the feed spacer, to be concentrated on the reverse osmosis membranes positioned at upper and lower sides of the feed spacer, thereby allowing salt to smoothly move through the reverse osmosis membranes.

Consequently, based on the aforementioned situations, it can be seen that the feed spacer according to the present invention minimizes the differential pressure by changing shapes of the filaments (or strands) having the same maximum and minimum diameters, and reduces the average mass fraction of salt on the surface of the membrane by concentrating a degree of occurrence of a vortex on the surface of the reverse osmosis membrane, thereby improving a performance of the reverse osmosis filter module.

**Claims**

1.   A reverse osmosis filter (100) module comprising:

> a tube (40) which includes an opening that accommodates a permeable liquid in a longitudinal direction;
> one or more reverse osmosis membranes (10) which extends outward from the tube (40) and are wound around the tube (40); and
> a feed spacer (20) which is in contact with the one or more reverse osmosis membranes (10) and wound around the tube (40),
> wherein the feed spacer (20) is formed by repeatedly positioning spiral filaments (21) on a two-dimensional plane,
> wherein each of the spiral filaments (21) forms a circular flow path having a diameter of 0.2 to 0.5 mm,
> wherein the filaments (21) have a diameter of 0.2 mm to 0.5 mm and a pitch (L1) of 780 to 3,120 $\mu$m, wherein the pitch is the distance between the multiple circular flow paths formed by the spiral shape,
> wherein the spiral filaments (21) are arranged such that a vortex of a liquid being supplied to the feed spacer (20) is formed at upper and lower sides of the filaments (21),
> wherein the upper and lower sides of the filaments (21) are in contact with the reverse osmosis membranes (10),
> wherein the feed spacer (20) is formed:
>
> > - by manufacturing the filaments (21) by extrusion molding, arranging the filaments (21) in parallel, and bonding connecting portions to one side and the other side of each of the arranged filaments (21) to fix the filaments (21); or
> > - as a single filament being provided to reciprocate between one side and the other side on a plane.

**Patentansprüche**

1.   Ein Umkehrosmose-Filtermodul (100) aufweisend:

> ein Rohr (40), das eine Öffnung aufweist, die eine durchlässige Flüssigkeit in einer Längsrichtung aufnimmt;
> eine oder mehrere Umkehrosmosemembranen (10), die sich von dem Rohr (40) nach außen erstrecken und um das Rohr (40) gewickelt sind; und

einem Zuführungsabstandshalter (20), der in Kontakt mit der einen oder den mehreren Umkehrosmosemembranen (10) steht und um das Rohr (40) gewickelt ist,

wobei der Zuführungsabstandshalter (20) durch wiederholtes Anordnen von Spiralfilamenten (21) auf einer zweidimensionalen Ebene gebildet ist,

wobei jedes der Spiralfilamente (21) einen kreisförmigen Fließweg mit einem Durchmesser von 0,2 bis 0,5 mm bildet,

wobei die Filamente (21) einen Durchmesser von 0,2 mm bis 0,5 mm aufweisen und einen Abstand (L1) von 780 bis 3.120 μm aufweisen, wobei der Abstand die Entfernung zwischen den mehreren kreisförmigen Fließwegen ist, die durch die Spiralform gebildet sind,

wobei die Spiralfilamente (21) so angeordnet sind, dass ein Wirbel einer Flüssigkeit, die dem Zuführungsabstandshalter (20) zugeführt wird, an einer oberen Seite und einer unteren Seite der Filamente (21) gebildet wird,

wobei die obere Seite und die untere Seite der Filamente (21) in Kontakt mit den Umkehrosmosemembranen (10) stehen,

wobei der Zurührungsabstandshalter (20) gebildet ist:

- durch Herstellen der Filamente (21) durch Extrusionsformen, paralleles Anordnen der Filamente (21) und Verbinden von Verbindungsabschnitten mit einer Seite und der anderen Seite jedes der angeordneten Filamente (21), um die Filamente (21) zu befestigen; oder
- als ein einzelnes Filament, das so bereitgestellt ist, dass es zwischen einer Seite und der anderen Seite in einer Ebene hin- und herbewegt wird.

**Revendications**

1. Module de filtre à osmose inverse (100) comprenant :

un tube (40) qui inclut une ouverture qui accueille un liquide perméable dans une direction longitudinale ;
une ou plusieurs membranes d'osmose inverse (10) qui s'étendent vers l'extérieur depuis le tube (40) et sont enroulées autour du tube (40) ; et
un intercalaire d'alimentation (20) qui est en contact avec la ou les membranes d'osmose inverse (10) et enroulé autour du tube (40),
dans lequel l'intercalaire d'alimentation (20) est formé par un positionnement répété des filaments en spirale (21) sur un plan bidimensionnel,
dans lequel chacun des filaments en spirale (21) forme un trajet d'écoulement circulaire ayant un diamètre compris entre 0,2 et 0,5 mm,
dans lequel les filaments (21) ont un diamètre compris entre 0,2 mm et 0,5 mm et un pas (L1) compris entre 780 et 3120 μm, dans lequel le pas est la distance entre les trajets d'écoulement circulaires multiples formés par la forme spiralée,
dans lequel les filaments en spirale (21) sont agencés de telle sorte qu'un tourbillon d'un liquide fourni à l'intercalaire d'alimentation (20) se forme aux parties latérales supérieure et inférieure des filaments (21),
dans lequel les parties latérales supérieure et inférieure des filaments (21) sont en contact avec les membranes d'osmose inverse (10),
dans lequel l'intercalaire d'alimentation (20) est formé:

- en fabriquant les filaments (21) par moulage par extrusion, en agençant les filaments (21) en parallèle et en liant des parties de liaison à un des côtés et à l'autre côté de chacun des filaments agencés (21) pour fixer les filaments (21) ; ou
- en un seul filament qui est fourni pour alterner entre un des côtés et l'autre côté sur un plan.

[Figure 1]

<u>100</u>

[Figure 2]

[Figure 3]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020160124788

- US 2012298578 A1


**Non-patent literature cited in the description**

- **SHRIVASTAVA et al.** Predicting the effect of membrane spacers on mass transfer. *Journal of Membrane Science,* 05 June 2008, vol. 323 (2), 247-256

- **FRITZMANN et al.** Helically microstructured spacers improve mass transfer and fractionation selectivity in ultrafiltration. *Journal of Membrane Science,* 28 March 2014, vol. 463, 41-48